# EUROPEAN PATENT SPECIFICATION

(11) **EP 4 284 635 B1**
(45) Date of publication and mention of the grant of the patent: **09.10.2024**
(21) Application number: 22704711.5
(22) Date of filing: 31.01.2022
(51) Int. Cl.: B32B 7/14, B32B 27/08, B32B 27/10, B32B 27/30, B32B 27/36, B32B 27/32

(54) **PAPER PACKAGING WITH THIN FILM BARRIER**
PAPIERVERPACKUNG MIT DÜNNFILMBARRIERE
EMBALLAGE DE PAPIER AVEC BARRIÈRE À FILM MINCE

(30) Priority: 01.02.2021 US 202163144303 P
(43) Date of publication of application: 06.12.2023
(73) Proprietor: Amcor Flexibles North America, Inc., Neenah, WI 54956 (US)
(72) Inventor: DE RYBEL, Nils, Neenah, Wisconsin 54957 (US); ETTRIDGE, Peter, Neenah, Wisconsin 54957 (US); COOLS, Pieter, Neenah, Wisconsin 54957 (US); BIRCH, Steven, Neenah, Wisconsin 54957 (US); STEWART, Paul, Neenah, Wisconsin 54957 (US)
(74) Representative: Vossius & Partner Patentanwälte Rechtsanwälte mbB
(86) International application number: PCT/US2022/014573
(87) International publication number: WO 2022/165341

(56) References cited:
- EP-A1- 2 758 239
- EP-A1- 3 317 095
- EP-B1- 2 758 239
- EP-B1- 3 317 095
- US-A- 5 332 586

## Description

### TECHNICAL FIELD

This disclosure is related to paper-based packaging film structures. The structures described herein include barrier materials and a patterned sealable material.

### BACKGROUND

The goal of increasing recyclability of paper-based packaging films becomes challenging when attempting for form packaging films having improved barrier properties and hermetic sealing at triple point regions. Traditionally, improved barrier properties and sealability are achieved paper-based packaging films by forming a multilayer film. Multilayer films contain a plurality of layers specific to forming the barrier layers and other layers providing enhanced sealing properties. As performance demands increase, the multitude of layers or thickness of the layers in the multilayer film increase, working against the recyclability of the structure as the paper content decreases on a percentage basis.

Often, when high performance is desired from paper-based packaging films, relatively high amounts of additional non-paper materials are added to the paper-based packaging films structures to meet the requirements of high barrier and hermetic sealing at triple point regions. To maintain recyclability of the paper-based packaging film, the paper component thickness and/or weight is increased to achieve the paper content required for designating the packaging material recyclable. This additional paper material is problematic in that 1) the addition is wasteful and 2) the additional bulk of the packaging film leads to processing issues on the package forming equipment. The increased thickness and stiffness of the film often leads to slow lines speeds as the film is more difficult to pull through forming collars. The packaging film may also be more difficult to seal because the additional paper weight tends to absorb the heat of the sealing bars and/or prohibit evenly distributed pressure application.

The documents EP2758239 A1 and EP3317095 A1 describe examples of paper-based packagings of the prior art.

### SUMMARY

Disclosed herein are flexible packaging films having high barrier properties and excellent sealing performance, while maintaining recyclability in a paper recycling process. The packaging films comprise a paper component and include minimal amounts of non-fiber based materials (i.e., minimal amounts of non-paper materials) to achieve high barrier properties and excellent sealing performance.

Disclosed herein are paper-based packaging films having a paper component, a polymeric film comprising a thickness in a range of from 2 µm to 10 µm, the polymeric film coated with a barrier material, and a patterned sealable material. The polymeric film is located between the paper component and the patterned sealable material, the barrier material is located between the polymeric film and the paper component, and the total composition of the paper-based packaging film may be greater than or equal to 80 %, greater than or equal to 85 %, greater than or equal to 90 % or greater than or equal to 95 %, by weight, of the paper component.

In some embodiments of the paper-based packaging film, the barrier material comprising a metal, a metal oxide, or an inorganic oxide. In some embodiments, the barrier material may be attached to the paper component by an adhesive.

Some embodiments of the paper-based packaging film can be described as having an exterior surface and an interior surface, a paper component, a polymeric film comprising a thickness in a range of from 2 µm to 10 µm, the polymeric film coated with a barrier material comprising a metal, a metal oxide or an inorganic oxide, and a sealable material. In one or more embodiments, the exterior surface comprises the paper component, the interior surface comprises each of the polymeric film and the sealable material, and the barrier material is located between the polymeric film and the paper component. The paper-based packaging film may have a total composition of greater than or equal to 80 %, greater than or equal to 85 %, greater than or equal to 90 % or greater than or equal to 95 %, by weight, of the paper component.

The paper-based packaging film may incorporate a sealable material that is heat sealable or the sealable material may be a pressure-sensitive cold seal. The sealable material may have a basis weight of between 1 g/m² and 10 g/m². The sealable material may have a basis weight of between 2 g/m² and 6 g/m².

Certain embodiments of the paper-based packaging film include a polymeric film that is a BOPP film, a BOPET film or an OPLA film. Certain embodiments of the paper-based packaging film further include an adhesive layer attaching the paper component to the polymeric film. The adhesive layer may include a material that is water sensitive.

Additional embodiments of the disclosure are directed to sealed packages formed from, or including, paper-based packaging films as described herein. The sealed packages may have a package configuration including one or more triple-point seal regions, and each of the triple-point seal regions includes the sealable material. It has been advantageously found that the triple point seal regions do not emit bubbles when leak tested according to ASTM D3078 or similar test methods. In some embodiments, the package configuration is a flow wrap or sachet and the basis weight of the paper-based packaging film is in a range of from about 35 g/m² to about 80 g/m². In other embodiments, the package configuration includes a gusset and the basis weight of the paper-based packaging film is in a range of from about 60 g/m² to about 140 g/m².

### BRIEF DESCRIPTION OF THE DRAWINGS

The disclosure may be more completely understood in consideration of the following detailed description of various embodiments of the disclosure in connection with the accompanying drawings, in which:
Figure 1 is an embodiment of a cross-sectional view of a paper-based packaging film,
Figure 2 is another embodiment of a cross-sectional view of a paper-based packaging film,
Figure 3 is a plan view of an interior surface of an embodiment of a paper-based packaging film,
Figure 4 is a perspective view of an embodiment of a sealed package comprising a paper-based packaging film,
Figure 5 is a perspective view of another embodiment of a sealed package comprising a paper-based packaging film,
Figure 6 is a cross-sectional view of an end seal of a sealed package, including a triple-point seal region, and
Figure 7 is a cross-sectional view of the end seal of a sealed package, including a triple-point seal region having a gap.

The figures are not necessarily to scale. Like numbers used in the figures refer to like components. It will be understood, however, that the use of a number to refer to a component in each figure is not intended to limit the component in another figure labeled with the same number.

The drawings show some but not all embodiments. The elements depicted in the drawings are illustrative and not necessarily to scale, and the same (or similar) reference numbers denote the same (or similar) features throughout the drawings.

### DETAILED DESCRIPTION

Provided herein are paper-based packaging films that overcome the short comings of previously provided films. The paper-based packaging films of the present disclosure are uniquely designed to deliver a critical combination of 1) recyclability (high paper content), 2) ease of package converting, 3) high barrier and 4) hermetic sealing at triple-point regions. High barrier is achieved by using a thin polymeric film coated with a barrier material. Hermetic sealing is achieved by localized or patterned sealing material, allowing for minimization of material while retaining high performance. Additionally, this unique combination of layers and materials allows for an overall high paper content and low thickness, leading to excellent runnability (i.e., high run speed) on packaging equipment.

Also provided herein are hermetically sealed packages including a triple-point region in the seal, the packaging including a high paper content paper-based packaging film. The design of the paper-based packaging films allows for hermetic sealing of the triple point region of the seals on commercial packaging equipment, while retaining a recyclable packaging structure with minimal thickness.

The paper-based packaging films described herein include a paper component, a polymeric film, a barrier material, and a patterned sealable material. The paper-based packaging films may include additional layers. The combination of these materials can be described as a multilayer film (e.g., a structure or a laminate). The term "layer", as used herein, refers to a building block of films. A layer is a structure of a single material type or a homogeneous blend of materials. A layer may be a single polymer, a blend of materials within a single polymer type or a blend of various polymers. A layer may contain metallic materials and may have additives. Layers may be continuous with the film or may be discontinuous or patterned. Both layers and films have a relatively insignificant thickness (z-direction) as compared to their respective length and width (x-y direction).

All layers and films described herein have two major surfaces, opposite each other, defined by the x-y plane. The term "outer layer" as used herein refers to one or more layers of a film that are on either major surface of the film, i.e., the layers that are not between two other layers of that film. A film has an exterior surface that becomes the exterior of a package in which the film is used. When formed into a package, the exterior surface of the film is exposed to the environment. A film has an interior surface that becomes the interior of a package in which the film is used. When formed into a package, the interior surface is used for forming seals and is exposed to the packaged product.

As used herein, the term "adjacent" means that the items, such as layers of a film, are near each other, with or without intervening material, such as adhesive. As used herein, the term "directly adjacent" or "in direct contact with" means that the items are in contact with each other, without intervening material.

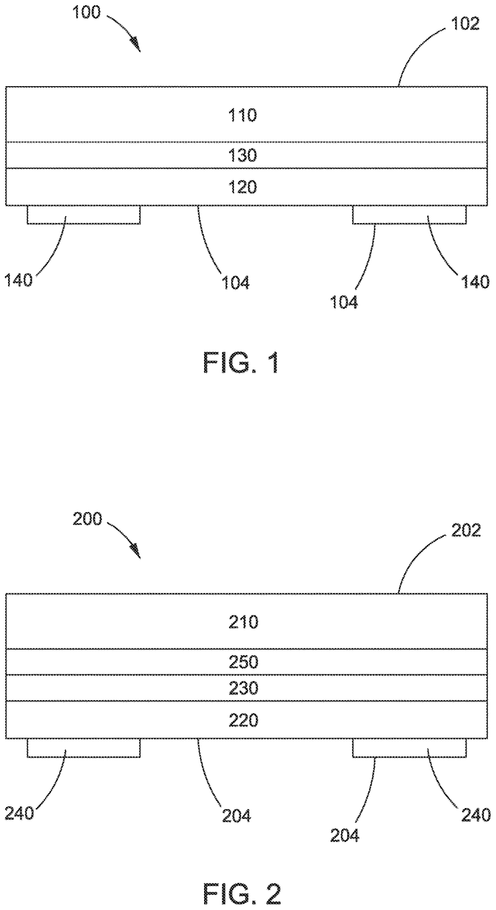

Figure 1 shows a cross-sectional view of an embodiment of a paper-based packaging film 100. In some embodiments, the paper component 110 forms an outer layer, the outer layer located at the exterior surface 102 of the paper-based packaging film 100. In some embodiments, the paper component 110 is adjacent to a barrier material 130, the barrier material 130 adjacent to a polymeric film 120. In some embodiments, the barrier material 130 is located on the surface of the polymeric film 120 and is located between the polymeric film 120 and the paper component 110. In some embodiments, a patterned sealable material 140 is located adjacent to the polymeric film 120, and on the surface of the polymeric film 120 that is opposite the barrier material 130. The interior surface 104 of the paper-based packaging film 100 is formed by both the polymeric film 120 and the patterned sealable material 140. In the regions of the patterned sealable material 140, the interior surface 104 is the sealable material and the interior surface 104 is the polymeric film 120 in other regions.

Figure 2 shows a cross-sectional view of another embodiment of a paper-based packaging film 200. In some embodiments, the paper component 210 forms an outer layer, the outer layer located at the exterior surface 202 of the paper-based packaging film 200. In some embodiments, the paper component 210 is adjacent to a barrier material 230, which is in turn adjacent to a polymeric film 220. In some embodiments, the paper component 210 and the barrier material 230 are bonded to each other by an adhesive layer 250. In some embodiments, the barrier material 230 is on the surface of the polymeric film 220 and is located between the polymeric film 220 and the paper component 210. In some embodiments, a patterned sealable material 240 is located adjacent to the polymeric film 220, and on the surface of the polymeric film 220 opposite the barrier material 230. The interior surface 204 of the paper-based packaging film 200 is formed by both the polymeric film 220 and the patterned sealable material 240. In the regions of the patterned sealable material 240, the interior surface 204 is the sealable material and the interior surface 204 is the polymeric film 220 in other regions.

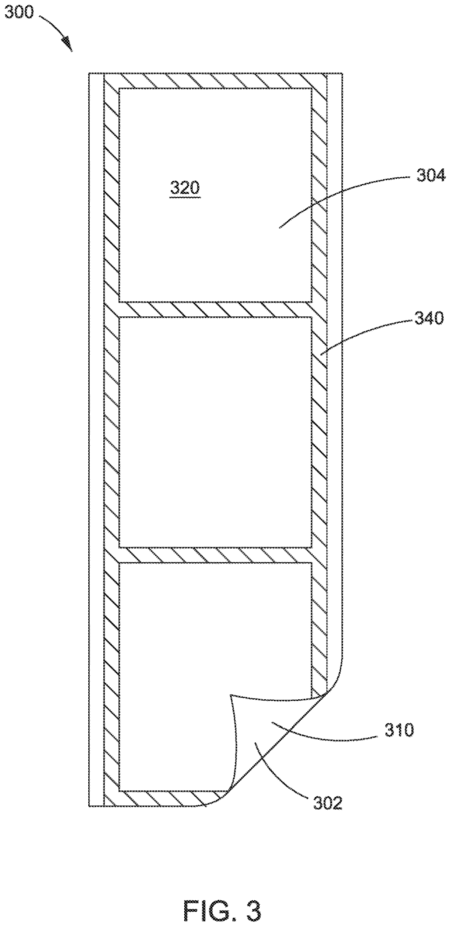

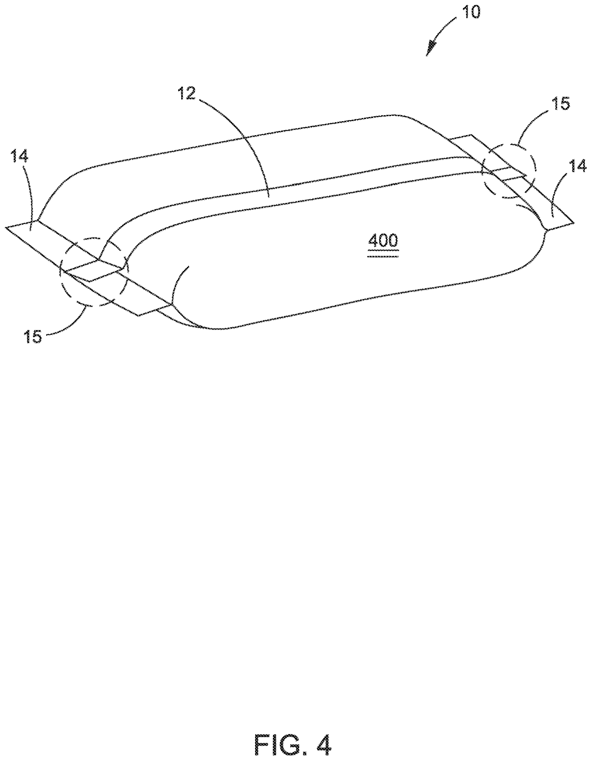

Figure 3 shows a plan view of an interior surface 304 of an embodiment of a paper-based packaging film 300 which may be useful for producing a flow-wrap style package, such as a package 10 shown in Figure 4. In some embodiments, the interior surface 304 includes a sealable material 340 in the regions in which the sealable material 340 is patterned (pattern of application shown in hash marked area). The interior surface 304 also includes the polymeric film 320 in the regions not covered by the sealable material 340. The bottom corner of the paper-based packaging film 300 is turned up to expose the paper component 310 on the exterior surface 302 of the paper-based packaging film 300.

Referring again to Figures 1-3, the paper-based packaging films disclosed herein include a paper component. In one or more embodiments, the paper component is an outer layer of the paper-based packaging film that is located at an exterior surface of the paper-based packaging film. In some embodiments, the paper component includes additional components adjacent to or on the exterior surface of the paper component, such as ink or over lacquer. The paper component may be any type of paper having a basis weight of 30 g/m² to 360 g/m², preferably 30 g/m² to 100 g/m², more preferably 30 g/m² to 70 g/m². Lower paper component weight is possible, while retaining easy recyclability, because the additional components are minimized. Examples of paper-components that may be useful in the paper-based packaging films include, but are not limited to, kraft paper, parchment, and bleached paper. The paper-component may be coated (i.e., clay coated) or uncoated. Examples of commonly used paper in packaging that would be acceptable in the paper-based packaging films described herein include machine glazed bleached kraft paper (MGBK), glassine, one-side clay-coated paper (C1S) and two-side clay-coated paper (C2S) although less common papers providing improved mechanical or barrier performance by using specialty fibers or additives could also be a part of the paper-based packaging films described in this application.

The paper-based packaging films disclosed herein include a polymeric film. Advantageously, the polymeric film is very thin. The polymeric film has a thickness greater than or equal to 2 micron. The polymeric film has a thickness less than or equal to 10 micron. The polymeric film has a thickness in a range of from 2 micron to 10 micron.

The polymeric film preferably comprises an oriented film, such as biaxially oriented polypropylene (BOPP), biaxially oriented polyester (BOPET), monoaxially oriented polyethylene (MDOPE), biaxially oriented polyamide (BOPA) or oriented polylactic acid (OPLA). The polymeric film may comprise a monolayer or multilayers.

The polymeric film may be an unoriented material such as, but not limited to, unoriented PLA.

The polymeric film is coated with a barrier material. The barrier material may be coated directly onto the polymeric film, or there may be a primer layer between the barrier material and the polymeric film. In some embodiments, the polymeric film includes a topcoat between the barrier material and the paper component. The topcoat may be directly applied to the barrier material. The barrier material is located between the polymeric film and the paper component. The barrier material may provide reduced transmission of oxygen, moisture or both oxygen and moisture.

In some embodiments, the polymeric film and the barrier material of the paper-based packaging film are each coextensive with the paper component. The barrier material is located between the paper component and the polymeric film. The barrier material may be polymeric in nature, such as polyamide, ethylene vinyl alcohol copolymer or polyvinyl alcohol copolymer. The barrier material may be a metal, such as a thin layer deposition of aluminum. The barrier material may be a transparent metal oxide coating or inorganic oxide coating such as aluminum oxide (AlOx) or silicon oxide (SiOx). The barrier material may be multi-layer and contain different layers of barrier materials. The barrier material may be a blend of multiple barrier materials.

Barrier materials that have been produced and found to be useful by the inventors in the paper-based packaging films include SiOx, AlOx and aluminum metal. These barrier materials are applied to the polymeric film by vapor deposition type processes and the thickness of the barrier material is negligible (i.e., less than 1 micron or less than 0.5 micron) with respect to the packaging film. These barrier materials have been coated on polymeric films such as BOPET, BOPP, MDOPP, MDOPE, OPA and amorphous PA.

Combinations of polymeric film and barrier material that have been produced and found to be useful by the inventors in the paper-based packaging films include SiOx coated OPET, SiOx coated BOPP, AlOx coated OPET, AlOx coated BOPP, aluminum metal coated OPET and aluminum metal coated BOPP.

In some embodiments, the paper-based packaging film containing a barrier material coated on a polymeric film has an average oxygen transmission rate (OTR) value that is less than or equal to 5 cm³/m²/day, less than or equal to 1 cm³/m²/day or less than or equal to 0.5 cm³/m²/day measured according to ASTM F1927 using conditions of 1 atmosphere, 23°C and 50% RH. In some embodiments, the paper-based packaging film containing a barrier material coated on a polymeric film has an average moisture vapor transmission rate (MVTR) value that is less than or equal to 1 g/m²/day, or less than or equal to 0.3 g/m²/day measured according to ASTM F1249 using conditions of 1 atmosphere, 38°C and 90% RH. An overview of inventive examples and the measured barrier properties can be found in Table 3.

The paper-based packaging films also include a patterned sealable material as an outer layer at the interior surface. As used herein, the term "patterned" means that the layer of sealable material is discontinuous with the paper-based packaging film. The sealable material is discontinuous with the polymeric film upon which it is applied. The sealable material may be applied to areas of the paper-based packaging film that are involved with closing the package by sealing. The sealable material may be applied over greater than or equal to 5 %, greater than or equal to 10 %, or greater than or equal to 15 % of the surface of the polymeric film. The sealable material may be applied over less than or equal to 30 %, less than or equal to 25 %, or less than or equal to 20 % of the polymeric film. As a result, the interior surface of the paper-based packaging film is partially the polymeric film surface and partially the sealable material. For example, the interior surface of the paper-based film may be approximately 80 % polymeric film and 20 % sealable material. The interior surface may consist essentially of or consist of the polymeric film and the sealable material.

The sealable material of the paper-based packaging film may have a composition that will allow the formation of a heat seal, thus forming a hermetically-sealed package. As used herein, the term "heat seal", "heat sealable" or "heat sealed" refers to two or more surfaces that have been or can be bonded together by application of both heat and pressure. Heat sealing is a well-known and commonly used process for creating packages and is familiar to those skilled in the art. Without intending to be bound by theory, during heat sealing, the sealing layer softens due to the application of heat, allowing formation of a heat seal bond. Since the heat must be driven through the entire paper-based packaging film to raise the temperature of the sealable material, and the paper component often absorbs much of the heat, it is advantageous if the heat sealable material softens and seals at a relatively low temperature. Lower seal initiation temperature (SIT) enables faster packaging line speeds. For example, some embodiments of the paper-based packaging film may include a heat sealable material that exhibits an SIT of less than or equal to 110°C, less than or equal to 100°C, or less than or equal to 90°C. Possible heat sealable materials may include, but are not limited to, acrylate copolymers, PET, PE, PP, or hot melts (wax based).

The sealable material may alternatively be a pressure sensitive cold seal. This embodiment of the paper-based packaging film is advantageous as formation of the package does not require heat. Without intending to be bound by theory, the pressure sensitive cold seal may be advantageous for the packaging of heat sensitive products such as ice cream or chocolates. Embodiments of the paper-based packaging film may include a pressure sensitive cold seal system including, but not limited to, natural or synthetic polyisoprene latex, or styrenebutadiene copolymer latex. The cold seal material may comprise blends that include acrylates and/or tackifiers.

In some embodiments, the sealable material acts as a caulking agent. In some embodiments, the sealable material flows into a gap of a triple point region (described below) at the sealing conditions. Without intending to be bound by theory, the ability to properly seal the triple-point may result from a combination of material properties, coating weight and sealing conditions. It is believed that having a sealing material that is relatively thick in the areas of the heat seals greatly increases the potential to reduce the size of the triple point region of the seal. In one or more preferred embodiments, the sealable material is not oriented.

The sealable material is applied at a thickness that allows for hermetic sealing, even in challenging applications such as triple point region sealing. In some embodiments, the sealable material may be applied at a basis weight of greater than or equal to 1 g/m² or greater than or equal to 3 g/m². In other embodiments, the sealable material may be applied at a basis weight of less than or equal to 8 g/m², less than or equal to 9 g/m², or less than or equal to 10 g/m². For example, the sealable material may have a basis weight in a range of from about 1 g/m² to about 10 g/m²,or in a range of from about 3 g/m² to about 9 g/m².

As used herein, the term "basis weight" is used to refer to the amount of material by weight is present in a predetermined area of a film or layer. Typically, the area defined is a square meter, but any area can be used. The area is defined in the length-width (i.e., x-y direction) of the film or layer. A material of a given thickness (z-direction) and density, has a specific weight when covering a defined area (i.e., a square meter). Basis weight is a commonly used measurement of weight for paper because the density of paper can vary widely. Stated differently, measuring paper by thickness can be difficult. Materials that are applied in discontinuous layers, such as the patterned sealable material, can be defined by basis weight. In the case of patterns, the basis weight refers to the amount of material by weight that is present when covering a defined area. The use of basis weight to measure weight of materials such as paper and patterned materials is common in the film converting industry.

The paper-based packaging film may include an adhesive layer bonding the paper component to the barrier material. The adhesive may be in direct contact with the paper. The adhesive may be in direct contact with the barrier material. The adhesive may be applied by any known means of web-to-web lamination, such as dry bond lamination, wet bond lamination or heat lamination. The adhesive may have a dry basis weight (i.e., after solvent removal) of between of between 0.5 g/m² and 4.0 g/m².

Embodiments of the disclosure advantageously provide paper-based packing films including an adhesive layer having an adhesive that is water sensitive. As used herein, the term "water sensitive" means that upon prolonged exposure to or immersion in liquid water, the adhesive loses its adhesive and/or cohesive properties, thus enabling the delamination (i.e., separation) of the paper component from the rest of the paper-based packaging film structure during a repulping process. Examples of materials that may be used within an adhesive layer between the paper component and the barrier layer include, but are not limited to, latex/casein blends, starch, sugar derivatives, cellulose, amino resin, (poly)acrylate, polyvinyl alcohol (PVOH), polyvinyl acetate, polyacrylic acid, maleic acid-modified ethylene copolymers, methylcellulose, carboxymethylcellulose, carboxy-functional polyesters, polyethylene succinate, polybutylene succinate, ionomers or hydrophilic polyurethane.

As mentioned previously, the packaging film may also include ink located on the exterior surface of the paper-based packaging film. The type of ink and amount of ink can be varied within ranges agreeable with local paper recycling guidelines.

As described herein, the "total composition" of the paper-based packaging film refers to all materials encompassed therein. The total composition of the paper-based packaging film may include greater than or equal to 80 %, greater than or equal to 85 %, greater than or equal to 90 %, or greater than or equal to 95 %, by weight, of the paper component. The total composition of the paper-based packaging film may include less than or equal to 99 %, less than or equal to 98 %, less than or equal to 97 %, or less than or equal to 96 %, by weight, of the paper component. For example, the paper-based packaging film may comprise in a range of about 85 % to about 98 % of the paper component, by weight of the total composition.

In some embodiments, when a pressure sensitive cold seal material is used as the sealable material, a release lacquer may be added to the exterior surface of the paper component (i.e., the exterior surface of the paper-based packaging film). The lacquer prevents the cold seal material from sticking to the paper component when the film is in roll format. In some embodiments, the release lacquer comprises a polyamide matrix with one or more wax additives. It is believed that a water-based release lacquer is advantageous for the release of coatings and inks from the non-seal side of the structure.

The paper-based packaging films can be advantageously used to form hermetically sealed packages. The packages may include a triple point region. As used herein, a "triple point region" is a configuration of the paper-based packaging film in the area in which it is sealed, the configuration including a junction where three or more interior surfaces of the paper-based packaging films meet at a single point. It is believed that a triple point region is prone to non-hermetic leaks, as it becomes more difficult to seal this type of area completely. The challenges associated with sealing a triple point region is discussed with reference to Figures 4, 5, 6 and 7.

Figure 4 shows a perspective view of a hermetically sealed package 10 including one or more triple point regions 15, formed from a paper-based packaging film 400, which may have the same properties of the paper-based packaging films 100, 200, 300 shown in Figures 1-3. The paper-based packaging film 400 has been run through a flow wrap style packaging machine, sealing the film 400 around a product (not shown). The paper-based packaging film 400 is oriented such that the exterior surface of the paper-based packaging film 400 (i.e., the side of the paper component) is on the outside of the package 10, visible by a consumer. Likewise, the internal surface of the paper-based packaging film 400 (i.e., the side of the polymeric film and the sealable material) is on the inside of the package 10 (not shown), exposed to the packaged product. The sealable material is connected, hermetically sealing the product therein. The package 10 includes a fin seal 12 along the length of the package and two end seals 14. In the illustrated embodiment of Figure 4, the package 10 has two triple point regions 15, located at the areas where the fin seal 12 and the end seal 14 overlap.

When the paper-based packaging film 400 is used for a flow wrap or sachet package configuration, the paper-based packaging film 400 may have a basis weight in a range of from about 35 g/m² to about 80 g/m². Without intending to be bound by theory, the basis weight in a range of from about 35 g/m² to about 80 g/m² reflects a structure that can have a high paper content and good package converting. In other words, the paper-based packaging film 400 has properties such as low stiffness and high heat transfer to run well on high speed packaging equipment.

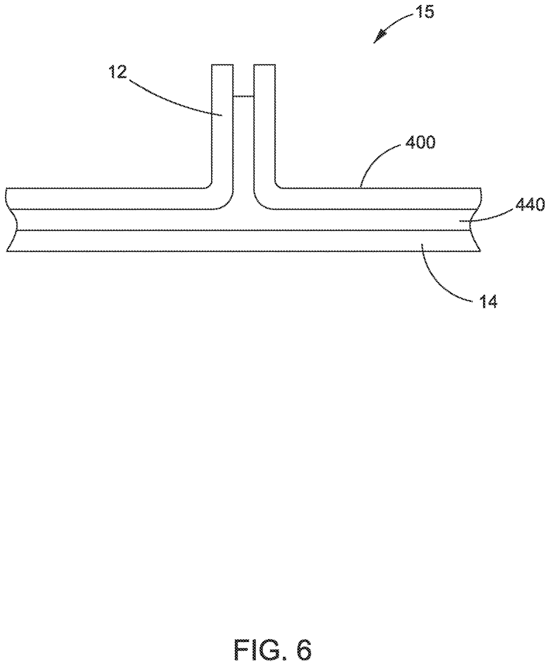

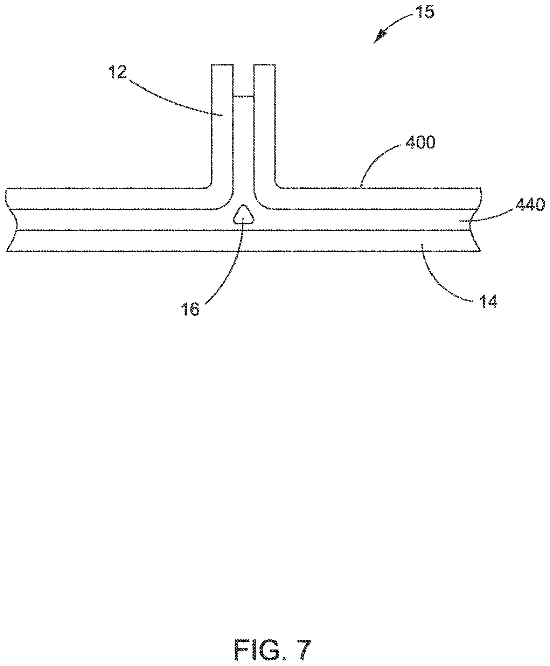

A cross-sectional view of a triple point region 15 of hermetically sealed package 10 is shown in Figures 6 and 7. The fin seal 12 is directed upward and the end seal 14 is horizontal. In the illustrated embodiments of Figures 6 and 7, the triple point region 15 is formed when the paper-based packaging film 400 on the right side of the fin seal 12, the paper-based packaging film 400 on the left side of the fin seal 12 and the paper-based packaging film 400 on bottom of the end seal 14 meet. In the case of a flow wrap style package, the three paper-based packaging films 400 that form the triple point region 15 each comprise the same paper-based packaging film 400, folded over upon itself. Specifically shown in Figures 6 and 7 are the sealable material 440 of the paper-based packaging film 400 now sealed to each other. Upon sealing the package 10, the sealable materials flow together and form a single layer, as shown in Figures 6 and 7.

The triple point region 15 can be difficult to seal hermetically, effectively, and consistently during automated packaging processes. The changing thicknesses of films, as films are folded into the triple point region, provide for uneven pressure and/or temperature at the transition points. If the seal pressure and/or temperature is not adequate for sealing, or if the sealable material is not suitable in type or thickness, a gap may remain between the films at the triple point region 15. This gap prevents hermeticity. An example of a triple point region gap 16 is shown in Figure 7. Figure 6 shows a triple point region 15 that has been successfully hermetically sealed, without a gap.

Triple point sealing can be very difficult on paper-based packaging films. If the sealable material is heat sealable, the paper component often provides significant insulation, preventing good heat transfer to the sealable material. When heat transfer is insufficient, the sealable material does not flow enough to fill the space where the films meet, leaving a gap. Additionally, paper containing structures may also have more stiffness, preventing adequate pressure from pushing the sealing materials together at the triple point. The stiffness of the film may cause sealing issues for both heat sealable materials or pressure sensitive cold seal.

The paper-based packaging films disclosed herein provide excellent films for packages that include triple point regions. The films may be recyclable in a paper-based recycling stream (i.e., high paper content), without significant bulk and stiffness. Bulkiness and/or stiffness may prevent effective triple point sealing. Additionally, using the patterned sealable material provides for substantially easier triple point sealing because the sealable material is concentrated where it is needed, in the sealing regions, without contributing significantly to the non-paper content of the packaging film.

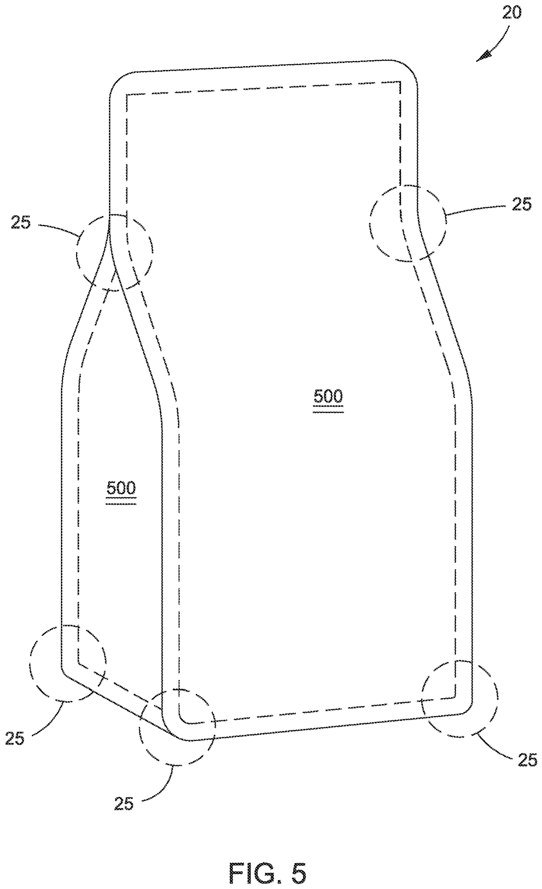

Figure 5 shows another embodiment of a package 20 that includes one or more triple point regions 25. In the illustrated embodiment of Figure 5, the package 20 is a flat bottom bag with terminated side gussets. The side gussets end at the triple point regions 25, and the films that meet at the triple point include the front panel, the back panel, and the side gusset panel. Additionally, triple point regions 25 are at each corner of the bottom, where the bottom panel meets a side and front/back panel. Each of the panels is made from a paper-based packaging film 500. Many other packaging formats include triple point regions as may be contemplated by one of ordinary skill in the art.

When the paper-based packaging film is used for a package configuration including a gusset, the film may have a basis weight in a range of from about 60 g/m² to about 140 g/m². The basis weight in a range of from about 60 g/m² to about 140 g/m² reflects a paper-based packaging film structure that can have a high paper content and good package converting. In other words, the film has properties such as moderate stiffness and high heat transfer to run well on high speed packaging equipment.

The effectiveness of triple point sealing (i.e., the presence of a gap) can be determined by package leak tests such as those outlined in ASTM D3078, Standard Test Method for Determination of Leaks in Flexible Packaging by Bubble Emission. As noted in this test method, the test may not analyze small openings in seals, but this test method is designed to determine if there are leaks that would be detrimental to specific products. For testing packaging that has seals including triple point regions, formed from paper-based packaging films, water can be used as the immersion fluid and the full vacuum level should be held for 30 seconds. The full vacuum level is highly dependent upon the package configuration and should be chosen such that the package has been inflated, forcing any headspace gas internal to the package to evacuate through small leaks at the triple point region. However, care should be taken to not raise the pressure to a point where seals and packaging material are damaged or otherwise compromised.

A modified version of the ASTM D3078 test includes implementing a pressure applied inside the packaging. This can be achieved by using a needle and a septum. A septum is placed on the packaging and subsequently punctured by a needle. Air can be pushed inside the packaging through the needle at a controlled rate, raising the internal pressure by 0.05 bar every 3 seconds. By carefully increasing the air rate and monitoring the pressure, the quality of the air tightness of the pack can be evaluated. The packaging is tested under water and the pressure required to form bubbles coming from the triple point area is noted.

Other tests that may be used to detect insufficient sealing in the triple point region include dye (Rhodamine) penetration testing or analysis by microscopy. A microscopy technique may be used to locate the gap 16 within the triple point region 15, such as the gap 16 shown in Figure 7. It is believed that the physical dimensions of the gap 16 may be different along the length of the triple point region 15. A microscopy analysis may be conducted to measure one or more portions of the gap 16 to determine the size of the gap 16.

The disclosure is now described with reference to the following examples.

### EXAMPLES

Inventive Example 1A, 1B and 1C are laminates that were used as horizontal flow wrap material and tested as described below. Test results can be found in Table 1. The format of these samples was like the sealed package illustrated in Figure 4.

Inventive Example 1A was produced by laminating a 67 g/m² uncoated bleached kraft paper to a metalized 8 micron BOPP film. A latex/casein blend adhesive was applied to the metalized side of the BOPP film at a weight of 1.5 g/m² for the lamination, using a wet bond lamination process. A natural rubber latex cold seal material was pattern coated onto the unmetallized side of the BOPP film. The cold seal was applied at approximately 5 g/m² in a pattern like that shown in Figure 3. The cold seal covered approximately 20 % of the surface of the BOPP film. A release lacquer was applied to the exterior surface of the paper at a dry basis weight of approximately 1.8 g/m².

Inventive Example 1B was produced in a similar manner as Inventive Example 1A. A 50 g/m² paper was used to replace the 67 g/m² paper of Inventive Example 1A.

Inventive Example 1C was produced in a similar manner as Inventive Example 1A. A SiOx coated 8 micron OPET film was used to replace the metalized BOPP film of Inventive Example 1A. The SiOx coated side of the OPET film was laminated facing the paper and the cold seal material was pattern coated onto the OPET side of the laminate.

Comparative Example 1 is a "common packaging film" that was produced using similar dry bond lamination and cold seal application techniques as Inventive Example 1A. As used herein, a "common packaging film" is a packaging film that does not include the elements or properties of the paper-based packaging films described herein. Given no paper component is used in the common packaging film structure, it is believed that the common packaging film used is not recyclable withing the paper recycling stream. The common packaging film structure has a total thickness of around 50 micron and is made from BOPP. The cold seal is typically applied in pattern in amounts of 3 g/m² to 6 g/m² dry weight. This type of structure runs well on a packaging line and provides hermitic seals to packaging having a triple point region. The example measured was taken from a packaging sample which is already commercially available and used widely.

Inventive Examples 1A, 1B, 1C and Comparative Example 1 were formed into flow wrap style packages and tested for leaks at the triple point region of the seal according to ASTM D3078. The width of the transverse seal (i.e., the length of the triple point region) is noted. As can be seen in Table 1, the pressure at which the triple point leaks are detected is significantly higher for the Inventive Examples as compared to commercial products tested. Commercial products (without paper component) are validated to be sufficiently hermetic. Therefore, it can be concluded that Inventive Examples 1A, 1B and 1C provide sufficient hermiticity and include improved recyclability (high paper content), ease of package converting, high barrier and hermetic sealing properties compared to current commercial full plastic structures.

**Table 1: Overview of hermiticity measurements for triple point area using modified pressure test (based on ASTM D3078)**

| Reference | Structure | Pressure (mbar) | Seal area width (mm) |
|---|---|---|---|
| Inventive Example 1A | Release lacquer (1.8 g/m²) // Print // Paper (67 g/m²) // Adhesive // Alu//OPP(8µm) // Cold seal (5 g/m²) | 46.5 | 4.1 |
| Inventive Example 1B | Release lacquer (1.8 g/m²) // Print // Paper (50 g/m²) // Adhesive // Alu//OPP(8µm) // Cold seal (5 g/m²) | 43.0 | 4.1 |
| Inventive Example 1C | Release lacquer (1.8 g/m²) // Print // Paper (67 g/m²)// Adhesive // SiOx // OPET(8µm) // Cold seal (5 g/m²) | 44.0 | 4.1 |
| Comparative Example 1 | BOPP // Print // Adhesive // BOPP // Cold Seal | 18-28 | 5.2-8.1 |

Inventive Examples 2A and 2B are laminates that were used as horizontal flow wrap material and tested as described below. Test results can be found in Table 2. The format of these samples was like the sealed package illustrated in Figure 4.

Inventive Example 2A was produced by laminating a 50 g/m² uncoated bleached kraft paper to a SiOx coated 4.5 micron OPET film. A latex/casein blend adhesive was applied at a weight of 1.5 g/m² for the lamination, using a wet bond lamination process. The SiOx coated side of the OPET film was laminated facing the paper. A heat sealable solvent based polyester material was pattern coated onto the OPET film side of the laminate. The polyester was applied at approximately 3.5 g/m² in a pattern like that shown in Figure 3. The heat seal covered approximately 20 % of the surface of the OPET film.

Inventive Example 2B was produced in a similar manner as Inventive Example 2A. In Inventive Example 2A, the heat sealable coating was increased to a coating weight of approximately 9 g/m².

Comparative Example 2 is a packaging film that was produced by laminating a 67 g/m² uncoated bleached kraft paper to a metalized 8 micron BOPP film. The BOPP film had a heat sealable surface opposite to the metallization. In Comparative Example 2, the heat sealable surface of the BOPP film is a thin layer of the BOPP film. No other sealing material was used in the BOPP film. The exact thickness of the sealing layer was not determined; however, thickness of the sealing layer is believed to be less than or equal to 2 µm.

As can be seen in Table 2, the pressure at which the triple point leaks are detected is significantly higher for the Inventive Examples as compared to Comparative Example 2. The results shown in Table 2 indicate that insufficient sealing material is available for the Comparative Example to fill the gaps formed in areas such as the triple point. To circumvent the challenges experienced in performing Comparative Example 2, it is believed that a thin film would need to be combined with an additional sealing material. Additionally, a greater amount of sealing material improves hermiticity. Increased hermiticity is shown by the increase in pressure observed when going from 3.5 g/m² sealing material (Inventive Example 2A) to 9 g/m² sealing material (Inventive Example 2B).

**Table 2: Overview of hermiticity measurements for triple point area using modified pressure test (based on ASTM D3078)**

| Example | Structure | Pressure (mbar) | Seal area width (mm) |
|---|---|---|---|
| Inventive Example 2A | Paper (50 g/m²) // Adhesive // SiOx // OPET(4.5micron) // Heat seal (3.5g/m²) | 32 | 11.5 |
| Inventive Example 2B | Paper (50 g/m²) // Adhesive // SiOx // OPET(4.5micron) // Heat seal (9.0g/m²) | 69 | 11.5 |
| Comparative Example 2 | Paper (50g/m²) // Adhesive // Alu // BOPP (8micron) | 20 | 4.8 |

Embodiments of the disclosure provide paper-based packaging films having high paper content. In Table 3, the different paper content of each of the Inventive Examples is shown. Table 3 shows that a predetermined minimum target of 80% paper content by weight is reached each Inventive Example has been effectively processed on a packaging line where the packaging format has at least two triple points.

**Table 3: Overview of paper contents and barrier properties of Inventive Examples**

| Example | Structure | Paper content* % by weight | WVTR at 38°C 90%rH (g/m²*24h) | OTR at 23°C 50%rH (cm³/m²*24h) |
|---|---|---|---|---|
| Inventive Example 1A | Release lacquer (1.8 g/m²) // Print // Paper (67 g/m²) // Adhesive // Alu // BOPP(8µm) // Cold seal (5 g/m2) | 84% | <0.5 | <50 |
| Inventive Example 1B | Release lacquer (1.8 g/m²) // Print // Paper (50 g/m²) // Adhesive // Alu // BOPP(8µm) // Cold seal (5g/m²) | 80% | <0.5 | <50 |
| Inventive Example 1C | Release lacquer (1.8 g/m²) // Print // Paper (67 g/m²) // Adhesive // SiOx // OPET(8µm) // Cold seal (5 g/m2) | 80% | <1.5 | <0.5 |
| Comparative Example 1 | BOPP // Print // Adhesive // BOPP // Cold seal | 0% | <3 | <600 |
| Inventive Example 2A | Paper (50 g/m²) // Adhesive // SiOx // OPET(4.5micron) // Heat seal (3.5 g/m²) | 85% | <1.5 | <0.5 |
| Inventive Example 2B | Paper (50g/m²) // Adhesive // SiOx // OPET(4.5micron) // Heat seal (9.0 g/m²) | 84% | <1.5 | <0.5 |
| Comparative Example 2 | Paper (50 g/m²) // Adhesive // Alu // BOPP(8micron) | 88% | <0.5 | <50 |

| | | | | |
|---|---|---|---|---|
| * Paper content is calculated assuming 1g/m² of ink when printed, 20 % coverage of all seal coatings, 1.4 g/m³ density for BOPET and 0.91 g/m³ density for BOPP. | | | | |

## Claims

1. A paper-based packaging film comprising:
a paper component,
a polymeric film comprising a thickness in a range of from 2 µm to 10 µm, the polymeric film coated with a barrier material,
a patterned sealable material,
wherein the polymeric film is located between the paper component and the patterned sealable material,
the barrier material is located between the polymeric film and the paper component, and
the total composition of the paper-based packaging film comprises greater than or equal to 80 %, greater than or equal to 85 %, greater than or equal to 90 % or greater than or equal to 95 %, by weight, of the paper component.

2. The paper-based packaging film according to claim 1, wherein the barrier material is one of a metal, a metal oxide, or an inorganic oxide.

3. The paper-based packaging film according to any one of claims 1-2, wherein the barrier material is attached to the paper component by an adhesive.

4. The paper-based packaging film according to any one of claims 1-3 wherein the sealable material is heat sealable.

5. The paper-based packaging film according to any one of claims 1-3, wherein the sealable material is a pressure-sensitive cold seal.

6. The paper-based packaging film according to any one of claims 1-5, wherein the sealable material has a basis weight of in a range of from about 1 g/m² to about 10 g/m².

7. The paper-based packaging film according to any one of claims 1-6, wherein the polymeric film is one of a BOPP film, a BOPET film or an OPLA film.

8. The paper-based packaging film according to any one of claims 1-7, further comprising an adhesive layer attaching the paper component to the polymeric film.

9. The paper-based packaging film according to claim 8, wherein the adhesive layer comprises a material that is water sensitive.

10. A sealed package comprising a paper-based packaging film according to anyone of claims 1-9.

11. The sealed package according to claim 10, wherein the sealed package has a package configuration including one or more triple-point seal regions, and each of the triple-point seal regions comprise the sealable material.

12. The sealed package according to claim 11, wherein each of the triple point seal regions does not emit bubbles when leak tested according to ASTM D3078 using an internal package pressure of greater than 20 mbar.

13. The sealed package according to any one of claims 11-12, wherein the package configuration is a flow wrap or sachet and the basis weight of the paper-based packaging film is in a range of from about 35 g/m² to about 80 g/m².

14. The sealed package according to any one of claims 11-13, wherein the package configuration includes a gusset and the basis weight of the paper-based packaging film is in a range of from about 60 g/m² to about 140 g/m².

## Patentansprüche

1. Verpackungsfolie auf Papierbasis, umfassend:
eine Papierkomponente,
eine Polymerfolie, die eine Dicke in einem Bereich von 2 µm bis 10 µm umfasst, wobei die Polymerfolie mit einem Barrierematerial beschichtet ist,
ein strukturiertes siegelfähiges Material,
wobei sich die Polymerfolie zwischen der Papierkomponente und dem strukturierten siegelfähigen Material befindet,
das Barrierematerial sich zwischen der Polymerfolie und der Papierkomponente befindet, und
die Gesamtzusammensetzung der Verpackungsfolie auf Papierbasis mehr als oder gleich 80 %, mehr als oder gleich 85 %, mehr als oder gleich 90 % oder mehr als oder gleich 95 %, bezogen auf das Gewicht, der Papierkomponente umfasst.

2. Verpackungsfolie auf Papierbasis nach Anspruch 1, wobei das Barrierematerial eines von einem Metall, einem Metalloxid oder einem anorganischen Oxid ist.

3. Verpackungsfolie auf Papierbasis nach einem der Ansprüche 1-2, wobei das Barrierematerial durch einen Klebstoff an der Papierkomponente befestigt ist.

4. Verpackungsfolie auf Papierbasis nach einem der Ansprüche 1-3, wobei das siegelfähige Material heißsiegelfähig ist.

5. Verpackungsfolie auf Papierbasis nach einem der Ansprüche 1-3, wobei das siegelfähige Material ein druckempfindliches Kaltsiegel ist.

6. Verpackungsfolie auf Papierbasis nach einem der Ansprüche 1-5, wobei das siegelfähige Material ein Flächengewicht in einem Bereich von etwa 1 g/m² bis etwa 10 g/m² aufweist.

7. Verpackungsfolie auf Papierbasis nach einem der Ansprüche 1-6, wobei die Polymerfolie eine von einer BOPP-Folie, einer BOPET-Folie oder einer OPLA-Folie ist.

8. Verpackungsfolie auf Papierbasis nach einem der Ansprüche 1-7, die ferner eine Klebstoffschicht umfasst, die die Papierkomponente an der Polymerfolie befestigt.

9. Verpackungsfolie auf Papierbasis nach Anspruch 8, wobei die Klebstoffschicht ein Material umfasst, das wasserempfindlich ist.

10. Versiegelte Verpackung, die eine Verpackungsfolie auf Papierbasis nach einem der Ansprüche 1-9 umfasst.

11. Versiegelte Verpackung nach Anspruch 10, wobei die versiegelte Verpackung eine Verpackungskonfiguration aufweist, die einen oder mehrere Dreipunktsiegelbereiche beinhaltet, und jeder der Dreipunktsiegelbereiche das siegelfähige Material umfasst.

12. Versiegelte Verpackung nach Anspruch 11, wobei jeder der Dreipunktsiegelbereiche bei Dichtheitsprüfung gemäß ASTM D3078 unter Verwendung eines Verpackungsinnendrucks von mehr als 20 mbar keine Blasen freisetzt.

13. Versiegelte Verpackung nach einem der Ansprüche 11-12, wobei die Verpackungskonfiguration ein Schlauchbeutel oder ein Tütchen ist und das Flächengewicht der Verpackungsfolie auf Papierbasis in einem Bereich von etwa 35 g/m² bis etwa 80 g/m² liegt.

14. Versiegelte Verpackung nach einem der Ansprüche 11-13, wobei die Verpackungskonfiguration eine Falte beinhaltet und das Flächengewicht der Verpackungsfolie auf Papierbasis in einem Bereich von etwa 60 g/m² bis etwa 140 g/m² liegt.

## Revendications

1. Film d'emballage à base de papier, comprenant :
un composant papier,
un film polymère comprenant une épaisseur dans une plage allant de 2 µm à 10 µm, le film polymère étant revêtu d'un matériau barrière,
un matériau scellable à motifs,
dans lequel le film polymère est situé entre le composant papier et le matériau scellable à motifs,
le matériau barrière est situé entre le film polymère et le composant papier, et
la composition totale du film d'emballage à base de papier comprend le composant de papier en une quantité supérieure ou égale à 80 %, supérieure ou égale à 85 %, supérieure ou égale à 90 % ou supérieure ou égale à 95 %, en poids.

2. Film d'emballage à base de papier selon la revendication 1, dans lequel le matériau barrière est l'un parmi un métal, un oxyde métallique ou un oxyde inorganique.

3. Film d'emballage à base de papier selon l'une quelconque des revendications 1 et 2, dans lequel le matériau barrière est fixé au composant de papier par un adhésif.

4. Film d'emballage à base de papier selon l'une quelconque des revendications 1 à 3, dans lequel le matériau scellable est thermoscellable.

5. Film d'emballage à base de papier selon l'une quelconque des revendications 1 à 3, dans lequel le matériau scellable est un scellement auto-collant à froid.

6. Film d'emballage à base de papier selon l'une quelconque des revendications 1 à 5, dans lequel le matériau scellable a un grammage dans une plage allant d'environ 1 g/m² à environ 10 g/m².

7. Film d'emballage à base de papier selon l'une quelconque des revendications 1 à 6, dans lequel le film polymère est l'un parmi un film BOPP, un film BOPET ou un film OPLA.

8. Film d'emballage à base de papier selon l'une quelconque des revendications 1 à 7, comprenant en outre une couche adhésive fixant le composant papier au film polymère.

9. Film d'emballage à base de papier selon la revendication 8, dans lequel la couche adhésive comprend un matériau qui est sensible à l'eau.

10. Emballage scellé comprenant un film d'emballage à base de papier selon l'une quelconque des revendications 1 à 9.

11. Emballage scellé selon la revendication 10, dans lequel l'emballage scellé a une configuration d'emballage comportant une ou plusieurs régions de scellement à point triple, et chacune des régions de scellement à point triple comprend le matériau scellable.

12. Emballage scellé selon la revendication 11, dans lequel chacune des régions de scellement à point triple n'émet pas de bulles lorsque la présence de fuites est mise à l'essai selon la norme ASTM D3078 en utilisant une pression interne d'emballage supérieure à 20 mbar.

13. Emballage scellé selon l'une quelconque des revendications 11 et 12, dans lequel la configuration d'emballage est un emballage tubulaire (flow wrap) ou un sachet et le grammage du film d'emballage à base de papier est dans une plage allant d'environ 35 g/m² à environ 80 g/m².

14. Emballage scellé selon l'une quelconque des revendications 11 à 13, dans lequel la configuration d'emballage comporte un soufflet et le grammage du film d'emballage à base de papier est dans une plage allant d'environ 60 g/m² à environ 140 g/m².
